# EUROPEAN PATENT APPLICATION

(11) **EP 2 716 543 A1**
(43) Date of publication of application: **09.04.2014**
(21) Application number: 12187089.3
(22) Date of filing: 03.10.2012
(51) Int. Cl.: B64C 1/26

(54) **Connection set for aircraft with detachable wings**

(71) Applicant: Sensefly S.A., 1024 Ecublens (CH)
(72) Inventor: Beyeler, Antoine, 1022 Chavannes (CH); Klaptocz, Adam, 1004 Lausanne (CH); Roberts, James F., Stokers Siding, New South Wales NSW 2484 (AU); Zimmermann, Loic, 1030 Bussigny (CH); Zufferey, Jean-Christophe, 1037 Etagnières (CH)
(74) Representative: Leman Consulting S.A.

(57) **Abstract**

This invention relates to a connection set that is used to attach and transfer force and torque between a wing (2a, 2b), comprising a lifting surface and a control surface (9) connected together by a hinge, and the central body (1) of an aircraft, which contains a servo-motor (10) used for actuating said control surface (9). The wing (2a, 2b) is connected to the central body (1) using a connection set comprised of two components. First, an attachment mechanism (3, 4, 5, 6) is used to align the wings (2a, 2b) relative to the central body (1) and to transfer the aerodynamic forces acting on the wing (2a, 2b) to the central body (1), preventing the wing (2a, 2b) from bending at its connection point. Second, a torque coupling mechanism (7, 8) is used to actuate the control surfaces that are present on the wings using servomotors (10) that are embedded within the central body (1). The connection set is engaged and disengaged using a single motion and does not require additional connection of electrical cables or mechanical fixations.

## Description

### INTRODUCTION

This invention relates in general to aircraft that have removable wings. More specifically, the invention relates to the connection set between the wings and the central body that enables transfer of forces and torques between the wings and control surfaces and the central body and servo-motors.

### BACKGROUND ART

Aircraft with removable wings are well known in the state of the art. Aircraft use the airflow over their wings to create lift when flying forwards. Though there are many ways of controlling the direction of an aircraft, the most common is to use control surfaces (such as ailerons or elevons) on the trailing edge of a wing. These control surfaces are generally actuated using servo-motors.

Radio-controlled model aircraft are commonly used by hobbyists for entertainment, and are increasingly outfitted with cameras for aerial photography. In the professional market, autonomous aircraft with on-board sensing and computation are increasingly being used for aerial photogrammetry, mapping and surveillance, with many more applications arising as the technology matures. Some of these aircraft feature wings that can be mechanically attached and detached from the central body of the aircraft.

Aircraft generally implement removable wings for two purposes. First, removable wings enable easier storage and transportation of the aircraft by separating the aircraft into three individual pieces. Second, removable wings can facilitate repair of the aircraft. Collisions between the aircraft and the ground or other obstacles can often damage the wings. Aircraft with removable wings can be easily returned to service by replacing a damaged wing without having to repair the entire aircraft.

Current designs of aircraft with removable wings have the servo-motor controlling their control surfaces embedded directly within the wing. This servo-motor must be connected to the central body that contains the rest of the flight electronics, generally through a cable. This configuration has several disadvantages. First, the cable must be connected and disconnected every time the wings are attached and detached. This complicates the wing attachment and detachment process, and continued use can wear down and damage the connector. Second, in case of a crash in which the wing is damaged and torn off the central body, the cable may be torn out of the central body, requiring repair of both the wing and the central body. Third, including the servo-motor within the wing significantly increases the cost of the wing and thus its replacement cost in case of damage.

It is therefore desirable to place expensive components such as the servo-motors within the central body to simplify the attachment and detachment process, reduce the wear on connectors and to reduce the replacement cost of the wings in case of damage. Separating the servo-motors from the control surfaces that they actuate, however, requires a special torque coupling mechanism between the two components that can be easily attached and detached yet still accurately transfer torque between them.

Some model aircraft (in particular model gliders) are built with their servo-motors embedded within the central body. The servo-motors are generally attached to the control surfaces through complex torque coupling mechanisms. In current implementations a wing is attached to a central body by first engaging an attachment mechanism for the wing. The torque coupling mechanism must then be engaged through a separate action, which generally takes the form of a screw, a clip or other mechanical connection mechanism within the central body that must be fastened in a separate motion after the wing is engaged. This engagement and disengagement process has several disadvantages. First, mechanically fixing the torque coupling mechanism with a fastener within the central body can cause damage to the central body in the case of a crash that tears the wing off the aircraft. Second, separating the process into two or more actions is more time consuming and increases the time required to launch the aircraft into the air.

It is thus desirable to create a connection set between the wings and the central body of an aircraft that can be engaged and disengaged in a single motion and that is designed to not damage the central body in the case of a crash that damages a wing.

### SUMMARY OF THE INVENTION

The current invention is directed at the connection set used on an aircraft to attach and transfer forces and torques between the aircraft's central body and a removable wing. More specifically, the connection set comprises two mechanisms: an attachment mechanism and a torque coupling mechanism.

According to the invention, the connection set that is used to attach a wing, comprising a lifting surface and a control surface connected together by a hinge, to a central body of an aircraft, said central body comprising at least a servo-motor to actuate the control surface of the wing, said connection set comprising:
an attachment mechanism between the wing and the central body; and
a torque coupling mechanism, comprising a first part which is mounted directly to the edge of the control surface or is the edge of the control surface of the wing and a second part, mounted to the servo-motor of the central body, the first part and the second part being freely engaged together while the wing is attached to the central body.

In one embodiment the aircraft is comprised of a central body and two removable wings. Each wing is made up of a lifting surface and a control surface, such as an aileron or elevon, attached together using a hinge. The central body contains the battery, flight motor used for thrust, all electronics required for flight and, most importantly, the servo-motors used to actuate the control surfaces. The wings are connected to the central body through a connection set comprised of two separate components. First, an attachment mechanism between the wing and the central body ensures the mechanical coupling and the transmission of the constraints between the wing and the central body. Second, a torque coupling mechanism between the servo-motor contained within the central body and the control surface on the wing is used to actuate the control surface by transferring the torque of the servo-motor to it.

The axis of the servo-motor is preferably aligned with the hinge of the control surface, so that the control surface is directly actuated by the servo-motor through the first and second parts of the torque coupling mechanism. The connection set is specifically designed so that both the attachment and torque coupling mechanisms are engaged and disengaged in a single motion. In addition, the connection set is designed to disengage without damaging the central body in case of a crash that impacts the wing.

### BRIEF DESCRIPTION OF THE DRAWINGS

The invention will be better understood, and other aspects and features of the invention will become apparent through the following description of the preferred embodiment taken in conjunction with the accompanying drawings.

Preferred embodiments will now be described, in terms of example only, with reference to the following figures, wherein:
FIG. 1a is a top view of a sample aircraft with wings detached;
FIG. 1b is a top view of the same aircraft with wings attached;
FIG. 2 is a detailed view of the connection set between the central body and a wing;
FIG. 3 is an exploded view of the torque-transfer connection set between the central body and the wing;

### DETAILED DESCRIPTION OF THE PREFERRED EMBODIMENTS

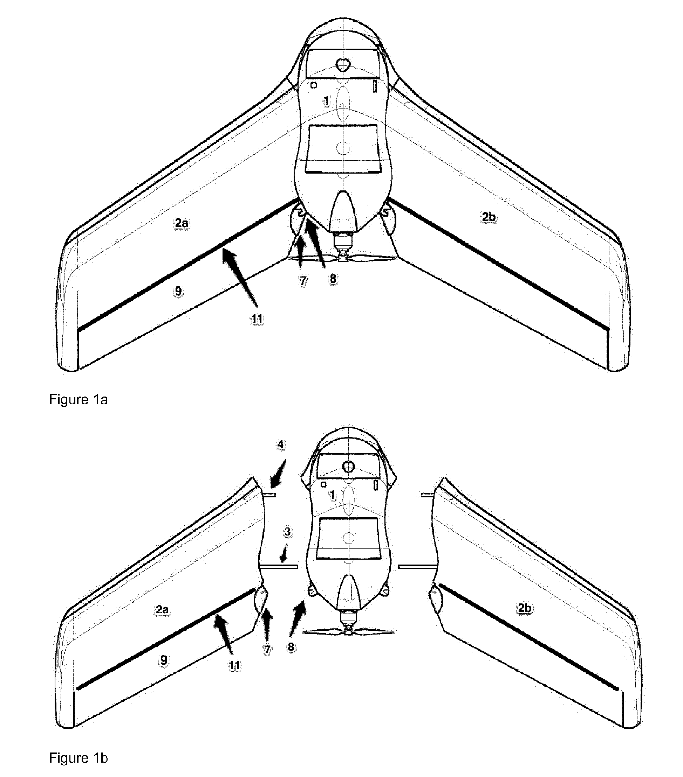

FIGS. 1a and 1b illustrate an aircraft comprised of a central body **(1)** and two detachable wings **(2a, 2b).** In FIG. 1a the wings **(2a, 2b)** are shown detached from the central body **(1),** clearly showing the attachment mechanism **(3-6)** and the torque coupling mechanism **(7-8).** In FIG. 1b the wings **(2a, 2b)** are attached to the central body **(1).**

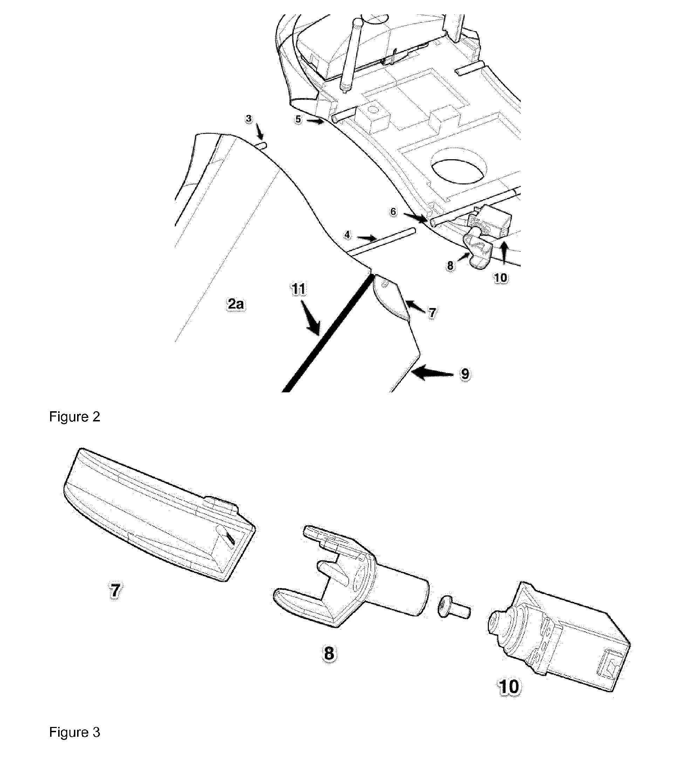

The first part of the connection set is the attachment mechanism **(3-6).** In this embodiment, the attachment mechanism **(3-6)** takes the form of two cylindrical bars **(3, 4)** fixed to each wing **(2a, 2b)** and two cylindrical receptacles **(5,** 6) for each wing **(2a, 2b)** within the central body **(1).** The cylindrical bars **(3, 4)** must be aligned and then slid into the receptacles **(5, 6)** to attach the wing **(2a, 2b)** to the central body **(1).** Using two bars instead of a single bar increases the stiffness of the attachment mechanism **(3-6)** and prevents the wing **(2a, 2b)** from rotating around the attachment point. The length, thickness and material strength is selected to ensure that the connection between wing **(2a, 2b)** and central body **(1)** is stiff enough to withstand the aerodynamic forces acting on the wing **(2a, 2b)** during flight. An added advantage of such an attachment mechanism **(3-6)** is that it auto-aligns the wing **(2a, 2b)** with respect to the central body **(1).** FIG. 2 illustrates a cross-section of the central body **(1),** revealing the cylindrical receptacles **(5, 6)** of the attachment mechanism **(3-6)** within the central body **(1).**

As an extension to this embodiment, the two cylindrical bars **(3, 4),** along with their associated cylindrical receptacles, can be made of different diameters. This has the advantage of preventing the wing **(2a, 2b)** from being mounted incorrectly on the central body **(1).** Another extension to this embodiment is to use different lengths of cylindrical bars **(3, 4)** and associated cylindrical receptacles **(5, 6),** once again with the goal of preventing the wing **(2a, 2b)** from being mounted incorrectly to the central body **(1).**

An alternate embodiment of the attachment mechanism **(3-6)** can be bars and slots of any shape, including square and half-moon bars. Using a single half-moon bar, for example, can be used to both hold the wing **(2a, 2b)** in place and align it with respect to the central body **(1),** as a half-moon bar is not free to rotate within a half-moon receptacle.

In yet another alternate embodiment, the attachment mechanism **(3-6)** may take the form of a clip on the wing **(2a, 2b)** and a slot in the central body **(1)** which mate together, matching magnets in the wing **(2a, 2b)** and central body **(1),** or any other fastening technology.

The wing comprises means of identification to cooperate with means to read the identification located in the central body. As an example, hall-effect sensors mounted on the cylindrical receptacles **(5, 6),** along with magnets mounted within the cylindrical bars **(3, 4)** on the wings **(2a, 2b),** can be used to detect the presence of the wings **(2a, 2b)** within the central body **(1).** This information can be used by the aircraft's controller to prevent flight if the wings **(2a, 2b)** are not attached properly. In an alternate embodiment, several magnets and several sensors can be mounted within the cylindrical bars and the central body **(1),** respectively. The presence of only one or several magnets can be used to detect different types or configurations of wings **(2a, 2b).** Other types of identification and sensing may also be used to detect the presence and type of wing **(2a, 2b)** that is attached. Examples include reflective tape on the wing **(2a, 2b)** detected by infrared proximity sensors in the central body **(1),** metallic parts in the wing **(2a, 2b)** detected by capacitive sensors in the central body **(1)** or a hard surface on the wing **(2a, 2b)** detected by mechanical switches in the central body **(1).** These identification elements and sensors can be integrated either within the attachment mechanism **(3-6)** or the torque coupling mechanism **(7-8).**

The second part of the connection set is the coupling mechanism **(7-8)** that has two parts. In this embodiment the first part **(7)** of the torque coupling mechanism **(7-8)** takes the form of a male connection piece **(7)** attached to the edge of the control surface **(9)** of the wing **(2a, 2b)** and the second part takes the form of a female connection piece **(8)** attached directly to the servo-motor **(10).** By "edge", we understand the lateral edge of the wing that allows the transmission of the torsion force to the entire control surface. FIG. 1b illustrated the aircraft with its wings **(2a, 2b)** attached to the central body **(1).** The attachment mechanism **(3-6)** is hidden within the central body **(1),** whereas the torque coupling mechanism **(7-8)** is seen in its engaged position. The axis of the servo-motor **(10)** is aligned with the hinge **(11)** of the control surface **(9)** when the torque coupling mechanism is engaged, so that the control surface is directly actuated by the servo-motor through the first and second parts of the torque coupling mechanism. It is to be noted that the first part (7) can be the lateral edge of the control surface (9) as long as the stiffness of the control surface allows the transmission of the torque from the servo-motor (10).

FIG. 3 illustrates an exploded view of the torque coupling mechanism between the servo-motor in the central body **(1)** and the control surface of the wing **(2a, 2b).** A female connector **(8)** with two walls is connected to the servo-motor **(10)** and mates with the male connector **(7)** mounted on the control surface **(9).** The male connector **(7)** fits tightly within the walls of the female connector **(8).** When the servo-motor **(10)** is rotated the torque is transferred directly to the control surface **(11)** through the walls of the female connector **(8)** that press against the male connector **(7).** One advantage of this torque coupling mechanism **(7-8)** is that it automatically aligns the axis of the control surface **(7)** with that of the servo-motor **(10)** during attachment of the wing **(2a, 2b).** A second advantage is that there is no fixed fastening point between the two connectors **(7-8),** and thus they come apart easily without damaging the servo-motor **(10)** within the central body **(1)** in case of a crash that impacts on the wing **(2a, 2b).**

In this embodiment a failsafe mechanical extrusion on the female connector **(8)** slides into a slot in the male connector **(7)** during attachment. This failsafe prevents the wing **(2a, 2b)** from being mounted upside-down, on the wrong side of the central body **(1)** or otherwise incorrectly. A similar failsafe extrusion and slot is also present on the male **(7)** and female **(8)** connector, respectively.

In an alternate embodiment, magnets can be embedded within both the male **(7)** and female **(8)** connection pieces to mate the servo-motor **(10)** to the control surface **(10).** Magnets also have the advantage of coming apart without damaging the servo-motor **(10)** in case of a crash that causes the wing **(2a, 2b)** to be torn off.

In an alternate embodiment, the first part **(7)** of the torque coupling mechanism **(7-8)** is the edge of the wing **(2a, 2b)** itself, which acts as the male connector that slides inside the second part of the torque coupling mechanism **(7-8)** which takes the form of a female connector.

One main feature of this connection set is the engagement and disengagement motion, which occurs in a single motion. The wing **(2a, 2b)** is attached to the central body **(1)** by sliding the cylindrical bars into the cylindrical receptacles within the central body **(1).** As the wings **(2a, 2b)** are inserted, the male **(7)** and female **(8)** parts of the torque coupling mechanism are automatically aligned facing each other, and are engaged in the same motion as the attachment of the wing **(2a, 2b).**

It should be noted that this is the preferred embodiment of the invention and has been made by way of illustration, not limitation. All modifications, alterations and changes coming within the spirit and scope of the present invention are herein meant to be included.

## Claims

1. A connection set to attach a wing, comprising a lifting surface and a control surface connected together by a hinge, to a central body of an aircraft, said central body comprising at least a servo-motor to actuate the control surface of the wing, said connection set comprising:
an attachment mechanism between the wing and the central body; and
a torque coupling mechanism, comprising a first part which is mounted directly to the edge of the control surface or is the edge of the control surface of the wing and a second part, mounted to the servo-motor of the central body, the first part and the second part being freely engaged together while the wing is attached to the central body.

2. A connection set according to claim **1** wherein:
the axis of the servo-motor is aligned with the hinge of the control surface when the torque coupling mechanism is engaged, so that the control surface is directly actuated by the servo-motor through the first and second parts of the torque coupling mechanism.

3. A connection set according to claim **1 or 2** wherein:
both attachment and torque coupling mechanisms of said connection set are engaged and disengaged in a single motion.

4. A connection set according to any of the claims **1 to 3** wherein:
the attachment mechanism provides an alignment for the first and second parts of the torque coupling mechanism.

5. A connection set according to any of the claims **1 to 4** wherein:
the first and second parts of the torque coupling mechanism is automatically disengaged in case of a force applied on the wing.

6. A connection set according to any of the claims **1 to 5** wherein:
said first part of the connection set is mechanically incompatible with a second part of another connection set connecting a second wing of the aircraft.

7. A connection set according to any of the claims **1 to 6** wherein:
said connection set comprises a means of identification and said central body comprises means to read the identification of the attachment mechanism.

8. A connection set according to claim **7** further comprising of:
said identification means allow to distinguish different types of wings as well as their presence and correct engagement.
